# EUROPEAN PATENT SPECIFICATION

(11) **EP 3 162 770 B1**
(45) Date of publication and mention of the grant of the patent: **19.08.2020**
(21) Application number: 16196901.9
(22) Date of filing: 02.11.2016
(51) Int. Cl.: C02F 9/00, C05D 9/02, C05F 11/02, C02F 1/28, C02F 1/44

(54) **A METHOD FOR EFFICIENTLY RECYCLING A STREAM CONTAINING IRON SLUDGE**
VERFAHREN ZUR EFFIZIENTEN WIEDERVERWENDUNG EINES EISENSCHLAMMHALTIGEN STROMS
PROCÉDÉ PERMETTANT DE RECYCLER EFFICACEMENT UN FLUX CONTENANT DES BOUES DE FER

(30) Priority: 02.11.2015 NL 2015710
(43) Date of publication of application: 03.05.2017
(73) Proprietor: Vitens N.V., 8019 BE Zwolle (NL)
(72) Inventor: LAARMAN, Alexander Jacob, 8019 BE ZWOLLE (NL); THIJSSEN, Henricus Matheus Wilhelmus Maria, 8019 BE ZWOLLE (NL)
(74) Representative: Algemeen Octrooi- en Merkenbureau B.V.

(56) References cited:
- JP-A- 2011 121 788
- US-A- 5 213 692
- US-A- 5 411 569
- US-A1- 2010 065 497
- GARAU GIOVANNI ET AL: "Stabilising metal(loid)s in soil with iron and aluminium-based products: Microbial, biochemical and plant growth impact", JOURNAL OF ENVIRONMENTAL MANAGEMENT, vol. 139, 29 March 2014 (2014-03-29), pages 146-153, XP028651525, ISSN: 0301-4797, DOI: 10.1016/J.JENVMAN.2014.02.024
- QIAO L ET AL: "The effects of clay amendment on composting of digested sludge", WATER RESEARCH, ELSEVIER, AMSTERDAM, NL, vol. 31, no. 5, 1 May 1997 (1997-05-01), pages 1056-1064, XP004058644, ISSN: 0043-1354, DOI: 10.1016/S0043-1354(96)00289-8

## Description

The present invention relates to a method for efficiently recycling a stream containing iron sludge. Disclosed herein is also a mixed stream obtained after carrying out the aforementioned method and the use of the aforementioned mixed stream.

In the Netherlands about 60% of the drinking water is produced from groundwater and 40% from surface water. Groundwater contains iron, which is converted into iron (hydr)oxide in the aeration and then precipitates. In the production from surface water, iron (for example FeCl₃) is usually added as a coagulant, which subsequently also precipitates in the form of iron (hydr)oxide. In this way 75,000 tons of iron sludge is annually produced in the production of drinking water in the Netherlands.

The concentration of iron in the soil is often high. Any iron deficiencies occurring in the soil are caused by insufficient availability of iron. In other words, there is more than sufficient Fe in the soil, but plants are unable to take it up. The solubility of Fe-oxide (the main form of Fe in the soil) is dependent on the pH, as a result of which iron deficiencies occur mostly in calcareous soils and/or in specific crops such as pear trees.

Iron oxide has a strong affinity for phosphate, a substance that often occurs in too high concentrations in surface water and soil. Using iron sludge to lower phosphate concentrations is a way of making efficient use of the former 'waste substance' iron sludge while tackling the phosphate problem. An important aspect in using iron sludge from drinking water purification processes is that iron sludge has a high water content, which is why it is turned into dry granules, to enable its practical use as an adsorbent. Such granules are known to be relatively easy to produce, strong enough not to involve a risk of them disintegrating during transport, and having good adsorption properties for phosphate. So it is possible to make iron sludge that is released in the production of drinking water a suitable raw material for a granular adsorbent for binding phosphate.

In the process of purifying groundwater pumped up from considerable depths for the production of drinking water varying amounts of iron, the amounts depending on the source, are deposited on the sand filter in the form of "iron sludge". The sludge is brown or orange and consists of a (more or less) stable suspension with a high water content.

It is desirable to efficiently recycle the former 'waste substance' iron sludge in addition to the aforementioned use of iron sludge as a means for lowering phosphate concentrations.

With other words, one object of the present invention is to bring the iron sludge to value in various applications.

From US patent 5,354,350 it is known that the coreaction between iron humate, a divalent metal oxide, an aqueous hydroxide of a monovalent Lewis acid and a water-soluble inorganic phosphate leads to the formation of hard particles containing homogeneous iron that is largely insoluble in water, but that does dissolve in agricultural soil solutions.

US patent 5,411,569 relates to an iron humate product having: (a) an iron concentration varying from about five to about forty-five weight percent based on its dry matter content; (b) a concentration of humic substances of about fifteen weight percent or more; and (c) an iron complex concentration in the form of iron hydroxides of less than about 25 weight percent of the total amount of iron present, said iron humate product being obtained by adding a sufficient concentration of an iron salt coagulant to an amount of crude water having a pH between about 3.8 and about 5.9 to reduce the organic colour of the water and to form a solid residue containing said iron humate product. Ferric sulphate, ferrosulphate, polyferric sulphate, ferric chloride, ferrochloride, polyferric chloride and mixtures thereof are given as examples of iron salt coagulants.

US patent 5,213,692 relates to a process for preparing an iron humate product in a process for treating an amount of coloured crude water, said iron humate product being adjusted to supply nutrients and organic material to the soil for use by plants grown in said soil, said process comprising the following steps: adding an iron salt coagulant to crude water to obtain a treatment solution, regulating the pH of the treatment solution between 3.8 and 5.5 to reduce the colour of the crude water to a previously chosen level and to obtain an iron humate product, the concentration of iron complex in the form of iron hydroxide in the iron humate product being less than 25 weight percent based on the dry matter content, separating said iron humate product from said treatment solution, concentrating and drying the separated iron humate product and bringing said iron humate product into contact with a source of nitrogen to obtain an iron humate product enriched with nitrogen that contains nitrogen in a range of 0.5 to 12 percent on a weight basis in the form of nitrogen with a minimum water-soluble iron content of 50 ppm iron. Ferric sulphate, ferrosulphate, polyferric sulphate, ferric chloride, ferrochloride, polyferric chloride and mixtures thereof are mentioned as examples of iron salt coagulants.

US patent application US 2010/065497 relates to a method for removing phosphonates from water comprising the following steps: introducing water into a first settling zone, transferring the water from the first settling zone to a membrane-filtration zone and filtering the water in that zone to obtain a concentrate containing phosphonates, bringing the concentrate containing the phosphonates into contact with sludge to cause at least some of the phosphonates in the concentrate to be adsorbed onto the sludge, adding a flocculant to the sludge and the concentrate to obtain a floc-mixture, and transferring the floc-mixture to a second settling zone to obtain a treated concentrate.

European patent application EP 1 216 976 relates to a method for isolating water-soluble humic molecules and to obtain complexes thereof comprising the following steps: the water-soluble humic fraction is extracted from a sub-stratum rich in organic matter, for example peat, compost and soil immersed in water, the insoluble component is removed from the suspension obtained to isolate the soluble humic fraction, the humic fraction is purified and concentrated by passing the aqueous extract through a column of resin, in which the humic molecules adsorbed by the column of resin are eluated and the surplus metals such as Na, K, Cd, Pb are removed. Finally the complex of water-soluble humic molecules and chemical fertiliser elements such as other metals and nutrients is prepared.

International application WO 2005-123630 relates to a method for correcting iron deficiency (ferric chlorosis) in plants comprising the application of a mixture of iron salts and humic substances to the growing medium.

International application WO 2009-030796 relates to the use of compost obtained from agroindustrial waste for the prevention and control of iron [Fe (II)] deficiency in plants, a mixture of compost and an iron [Fe (II)] salt being applied to the soil either directly or by using irrigation water.

The group of iron chelates is used in agriculture and greenhouse horticulture. In iron chelates, Fe is bound to a chelate such as EDDA in the form of Fe³⁺. How long Fe chelates remain active in the soil depends on the stability and mobility of the Fe chelate. Iron chelates are very soluble, enabling them to reach the plant roots via the moisture in the soil. The plants do not absorb the Fe chelate in its entirety but secrete a substance that causes Fe to be released so that it can be absorbed. The use of very mobile chelates, such as EDTA, is under discussion because such chelates are very stable in the environment and may lead to leaching of heavy metals.

The present invention therefore relates to a method for efficiently recycling a stream containing iron sludge as defined in claim 1.

The present inventors have investigated the characterisation of iron sludge and have discovered that iron sludge consists of tiny Fe-oxide nanoparticles that coagulate together with organic matter to form aggregates of 1 to 50 µm. The composition and physical-chemical properties of iron sludge that is formed in a process for preparing drinking water closely correspond to those of iron sludge as it is formed in nature in the oxidation of iron-rich groundwater. The solubility of Fe sludge, and hence its availability for plants, may however be greater than that of Fe oxide that occurs naturally in the soil. So iron sludge is as such a naturally occurring iron, but its form (iron sludge) and the process in which it is obtained (extraction from groundwater) may be termed unique. In the present description the term 'iron sludge' is also intended to include iron water and iron sewage. The latter streams generally have a lower dry matter content than iron sludge.

The present inventors have also found that, unlike Fe chelate, Fe is contained in iron sludge in the form of an Fe oxide (FeOOH). In the soil, iron sludge will bind to organic matter, precluding the transport of the iron sludge to the plant roots via the moisture in the soil. So iron sludge does not have the unique properties of an Fe chelate in terms of mobility and stability in the soil.

The aforementioned iron sludge in step i) is obtained from a sand filter that forms part of the aforementioned process for preparing drinking water. Sand filtration is a process in which water is purified thanks to the 'porous' character of a layer of sand that is used to detain the particles contained in the water to be purified. In addition, various physical/biological processes taking place in a sand filter remove various substances (iron, manganese, ammonium) from the water. Sand filtration is often used in the treatment of groundwater to remove the iron dissolved in the groundwater. Aeration of groundwater causes iron and manganese to be oxidised, resulting in the formation of flocks that are subsequently detained by the sand filter. After some time the sand filter will be saturated with particles as the result of the deposition of iron sludge on the filter. The iron sludge thus obtained is in the present invention efficiently recycled, in particular as an Fe nutrient in an agricultural context.

In the present method it is preferable not to add one or more additional iron salt coagulants such as ferric sulphate, ferrosulphate, polyferric sulphate, ferric chloride, ferrochloride, polyferric chloride and mixtures thereof, whose addition is said to be necessary in some of the publications discussed above.

The iron sludge used in the method according to the invention has an iron content ranging from 0.1 to 10 vol.%, preferably 1-4 vol.%, based on the total volume of the liquid product.

According to the present invention the aforementioned iron sludge is mixed with a residual stream deriving from a drinking-water production facilty.

The aqueous product stream used as residual stream is obtained in a regeneration step at a drinking-water production facility. It is desirable for the regeneration step to comprise an ion-exchange step.

The aforementioned aqueous product stream has undergone a salt-recovery treatment, with the resultant aqueous stream devoid of salt being used as the residual stream, said aqueous stream in particular being rich in humic and fulvic acids.

The concentration of humic and fulvic acids in the aforementioned residual stream ranges from 10 to 30 wt.%, based on the weight of the residual stream. Lower concentrations of humic and fulvic acids in the aforementioned residual stream can be obtained by using purification techniques. Such a residual stream containing humic and fulvic acids is referred to as "HumVi" in the additional experiments described below. In the description the term "humic residual stream" is furthermore understood to include a residual stream with a high concentration of humic and fulvic acids. Such residual streams are preferably devoid of salt, in particular as a result of the recovery of salt via at least one filtration step, in particular diafiltration. Table 5 included in the additional experiments shows specific concentrations of humic and fulvic acids.

The term "humic acid" as used herein is understood to be a collective noun for organic substances that are ultimately released in the slow decomposition of the peat soil, and that give the groundwater in that area a yellowish colour. Besides in peat, humic acid also occurs in coal and lignite. Humic acid is not by definition acid, but serves to 'buffer' or 'regulate' the soil because of its property of retaining minerals, nutrients and other substances and releasing them when necessary. This makes it possible for soil life such as microorganisms, fungi, worms and insects to develop, and it contributes towards a healthy soil life and soil structure.

The aforementioned salt-recovery treatment comprises at least one filtration step, in particular diafiltration.

The inventors have found in practice that groundwater of certain drinking water production facilities is characterised by relatively high concentrations of colour and TOC (Total Organic Carbon), the colour being caused by an organic substance that is also known as humic acid. It has been found to be possible to remove the undesired colour in a decolouring installation based on ion exchange. However, after two to three weeks the resin beds of the decolouring installation are saturated, and they are then regenerated by using a salt solution, for example NaCl and/or KCl, as the regenerating agent. However, the residual streams may not be discharged to municipal sewer systems because of their high concentrations of 3-4% regenerating agent and 5-8% organic matter. So it is desirable to develop an efficient application for these residual streams, in which the salt can be recycled to the regeneration process. Diafiltration can be mentioned as a preferable filtration step, which step is preferably preceded by a concentration step to reduce the volume before the diafiltration step. The rinse water that is extracted from a membrane system, in particular of the reverse osmosis type, which membrane system processes the permeate of both the concentration step and the diafiltration step, is recycled in the diafiltration process. The residual stream thus obtained is rich in humic and fulvic acids and is efficiently recycled according to the present invention, in particular by using step i), further comprising the mixing of the aforementioned iron sludge with a residual stream deriving from a drinking water production facility, after which the stream containing iron sludge is applied as an Fe nutrient in an agricultural context in step ii).

From the viewpoints of stability and reactivity the aforementioned residual stream is mixed with the aforementioned stream containing iron sludge in an amount of 1-20 vol.%, based on the mixed stream thus obtained.

The mixed stream obtained according to the present method comprises humus-bound iron chelates in a weight percentage of 0.1-10% based on the total weight of the mixed stream.

The mixed stream obtained from the method according to the invention is applied as an Fe nutrient in an agricultural context.

The mixed stream, referred to as Fe sludge containing HumVi (colloids, nanoparticles and chelates) has an iron concentration ranging from 0.1 to 10 vol.%, preferably 0.1-2 vol.%, based on the total volume of the liquid product. The mixed stream that is obtained after carrying out the present method may comprise humus-bound iron, in particular as one or more of the group of colloids, nanoparticles and chelates, in a concentration ranging from 0.1 to 10 vol.%, based on the total volume of the mixed stream, which mixed stream has an Fe/TOC ratio in the range of 200-2000.

Alternatively mixed stream referred to as Fe sludge may contain HumVi (nanoparticles and chelates) in a concentration ranging from 0.01 to 1 vol.%, preferably 0.09-0,65 vol.%, based on the total volume of the liquid product, which product is applied as an Fe nutrient in an agricultural context. This mixed stream can be obtained after carrying out the method according to the invention and may comprise humus-bound iron, in particular in the form of one or more of the group comprising nanoparticles and chelates, in a concentration ranging from 0.01 to 1 vol.%, based on the total volume of the mixed stream, said mixed stream having an Fe/TOC ratio in the range of 100-1000.

Alternatively mixed stream referred to as Fe sludge may contain HumVi (chelates) and may have an iron content ranging from 0.01 to 0,5 vol.%, preferably 0,05-0,13 vol.%, based on the total volume of the liquid product, which product is applied as an Fe nutrient in an agricultural context. This mixed stream can be obtained after carrying out the method according to the invention and comprises humus-bound iron, in particular in the form of chelates, in a concentration ranging from 0.01 to 0,5 vol.%, based on the total volume of the mixed stream, said mixed stream having an Fe/TOC ratio in the range of 1-10.

The aforementioned mixed streams, but also the aforementioned stream based on iron sludge, are in practice often used while having an iron content of about 6 vol.%. Such a value will imply that certain streams will have to be concentrated, which steps are known to an expert in this field.

Substrate cultivation, hydroponics and outdoor cultivation can be mentioned as examples of the aforementioned agricultural context.

The mixed stream can also be applied as an Fe nutrient in animal feedstock, examples of such mixed streams having been mentioned above, in particular for different iron concentrations and the form in which the iron occurs in it, viz. as one or more of the group comprising colloids, nanoparticles and chelates.

The present invention will be elucidated with reference to a number of examples below, said examples being merely illustrative and not limiting the invention in any way.

### Example 1

An aqueous residual stream obtained from a drinking water production facility consisting largely of fulvic acid (80%) and having a basic pH (8.2), 1.25 g/l C and an Na content of 38 g/l was mixed in ratios of 5 and 10% (v/v) with iron sewage and iron sludge. After one hour's shaking the samples were centrifuged and filtered, after which the Fe concentration in the filtrate (< 0.45 µm) was measured.

The concentration of 'dissolved Fe' in the sewage water and sludge was found to be low in an unmixed sample, i.e. a sample to which the residual stream rich in fulvic acids had not been added. After the addition of the aqueous residual stream, high Fe concentrations of 55 to 299 mg/l were measured in the filtrate. 30 to 86% of the total amount of Fe was dissolved in the iron sewage after the addition of the aqueous residual stream. The mixed samples of the aqueous residual stream and Fe samples (iron sewage and sludge) were subsequently stored in a cool place and the Fe measurement was repeated after 7 weeks. Comparable Fe concentrations were then measured, from which it could be concluded that the formed Fe complexes remained stable for this period.

**Table 1**

| Mixed sample | | Fe in solution < 0.45 µm | |
|---|---|---|---|
| (%) | (g/l) | (mg/l) | (%) |
| Spannenburg sewage water | | | |
| 0 | 0 | 0.04 | 0 |
| 5 | 6.25 | 133 | 67 |
| 10 | 12.5 | 170 | 86 |

| Hammerflier sewage water | | | |
|---|---|---|---|
| 0 | 0 | 0.07 | 0 |
| 5 | 6.25 | 89 | 30 |
| 10 | 12.5 | 159 | 53 |

### Example 2

A mixing test using iron water and an aqueous, humic residual stream showed that up to 80% of the Fe sludge 'dissolves' after the addition of the aqueous, humic residual stream (Table 2). This surprising effect implies the formation of an Fe chelate.

**Table 2: results of the iron water/humic residual stream mixing test**

| Treatment | Fe conc. (< 0.45 µm) |
|---|---|
| No Fe sludge/10 % humic residual stream | 10 mg/l |
| Fe sludge/0% humic residual stream | 0.04 mg/l (0%) |
| Fe sludge + 10% humic residual stream | 170 mg/l (86%) |

### Example 3

Some experiments were carried out to measure the availability of iron in soil that was treated with iron water. Soil samples were taken on different sampling days during (intermediate) harvest(s) to test the following treatments: treatment 1 = 100 mmol EDDHA/L of potting soil, treatment 2 = 100 mmol iron water/L of potting soil; treatment 3 = 500 mmol iron water/L of potting soil. The following Table 2 gives a survey of the fresh weight and dry matter content of the basil plants.

**Table 3**

| Treatment | Fresh weight | Dry weight | Dry matter |
|---|---|---|---|
| | g | g | Dry weight/fresh weight * % g/g |
| Standard 100 micromol iron chelate EDDHA | 43.5 | 3.15 | 7.2 |
| iron water (100 micrommol/l) | 48.7 | 3.47 | 7.1 |
| iron water (500 micromol/l) | 45.9 | 3.38 | 7.3 |
| Standard deviation | 5.7 | 0.52 | |

The above Table 2 clearly shows that iron water and EDDHA increase the availability of iron in the soil. It can also be concluded that the soil contains almost as much iron from iron water as EDDHA iron.

### Additional experiments

The sampling of the iron water was carried out so as to ensure that the sample would contain only rinse water of the pre-filter, to prevent the risk of the leaching of calcium from the after-filter. The iron sludge contained rinse water of both the first and the second filter, and may therefore have had a higher calcium content. Calcium may prevent the conversion of iron oxide to Fe-HumVi because of competition with the calcium and a pH-increasing effect.

Iron water was supplied as a solution with a very low dry matter content. The sludge settled after some time. The clear supernatant of the samples from Spannenburg and St. Jansklooster was sucked up in order to increase the dry matter content of the iron water. The sludge from Hammerflier was not concentrated because the supernatant was not clear. All the samples were kept in a refrigerator for the duration of the project.

**Table 4: survey of the locations where iron water and iron sludge samples were taken**

| Location | |
|---|---|
| Spannenburg | Iron water (concentrated at the lab.) |
| St. Jansklooster | Iron water (concentrated at the lab.) |
| Hammerflier | Iron water (as supplied) |
| Spannenburg | iron sludge |
| St. Jansklooster | iron sludge |
| Hammerflier | iron sludge |

The chemical composition of the iron sludge and humic acid samples was determined after destruction using aqua regia (microwave destruction). The composition of the destroyed product was analysed using ICP-AES. The organic carbon content was determined using dried samples (100°C) and a LECO C/N analyser after the removal of CaCO3 with the aid of acid.

The fractions of humic acid, fulvic acid and hydrophilic acids were determined according to a standard method (see Van Zomeren, A. and R.N. Comans, Measurement of humic and fulvic acid concentrations and dissolution properties by a rapid batch procedure. Environmental science & technology, 2007. 41(19): pp. 6755-6761). Humic acids are defined as the fraction that precipitates on acidification to pH 1, while fulvic and hydrophilic acids remain in solution under these conditions. Fulvic acids and hydrophilic acids were distinguished by causing fulvic acids to adsorb onto DAX resin.

HumVi was mixed with iron sewage and iron sludge in doses of 0; 2.5; 5; 12.5; and 25% (v/v). The mixtures were shaken for two hours at a low speed and were then centrifuged (10 min., 3000 rpm). The supernatant was poured off and stored for analysis.

The effect of the shaking time on the Fe concentration of the supernatant was determined in an additional test for the treatments involving HumVi doses of 0, 12.5 and 25%. In the case of this series of samples the supernatant was poured off after 24 and 96 hours' shaking.

The effect of acidification on the Fe concentration of the supernatant was determined in an additional test using iron sludge from Hammerflier and Spannenburg. In this test 10% HumVi was added to iron sludge, after which the mixtures were acidified with sulphuric acid to pH values of 6.5; 5.5; 4.5 and 4. The samples were not shaken because of the substantial foaming. The supernatant was poured off after centrifugation.

In all the tests described above the total iron concentration in the supernatant was determined by analysing unfiltered samples (after 100x dilution with demineralised water).

In addition, the concentration of 'dissolved' Fe in some of the samples was determined after filtration through 0.45 µm. The samples were diluted with demineralised water in order to be able to filter them. The filtration was carried out after 50x and 500x dilution so as to be able to determine the effect of dilution on the ion concentration after filtration.

The elementary composition (Fe, P, Zn, Cu, etc.) was analysed by means of ICP-AES. The TOC concentration was determined colorimetrically (SFA).

The dry matter content of the iron sludge from the Hammerflier location was substantially higher (8.1%) than that of the sludge from the other two locations (3.6-4.1%). 35-48% of the dry matter content of the iron sewage and iron sludge samples is attributable to Fe. Converted to Fe oxides (FeOOH 89 g/mol), this means that iron sewage and iron sludge consist of 55 to 84% Fe oxides.

The organic C content (TOC) of the iron sewage was substantially higher (2.7-3.5 g/l) than that of the iron sludge (0.1-0.7 g/l), implying that TOC is removed during the concentration, and is hence largely contained in the aqueous phase of the sewage. So TOC does virtually not adsorb onto Fe oxides.

The HumVi product is characterised by a very high TOC content (125 g/l) and a high concentration of Na (37 g/l). Table 5 shows that the HumVi product consists largely of fulvic acids that do not precipitate at pH 1.0. The fractioning was carried out using a sample that had been diluted 1000 times because the method was originally developed for the fractioning of TOC in soil extracts, and hence low concentrations.

**Table 5 TOC content and distribution of humic acids, fulvic acids and hydrophilic acids in the HumVi product**

| Parameter | Unit | HumVi |
|---|---|---|
| TOC (g/l) | (g/l) | 125 |
| Humic acid (%) | (%) | 2 |
| Fulvic acid (%) | (%) | 84 |
| Hydrophilic acids (%) | (%) | 13 |

Fractioning according to Van Zomeren et al., 2007, carried out using HumVi product after 1000x dilution.

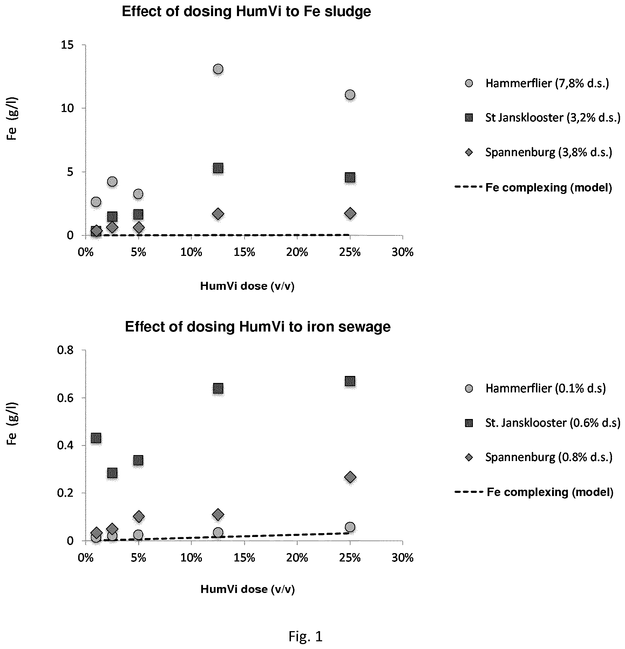

Figure 1 shows the results of the test in which humic acid was added to iron sewage in different doses (2.5 - 25% (v/v)). The concentration of iron in the supernatant was then determined without filtration, the supernatant consequently consisting of Fe-HA, iron oxide nanoparticles and iron oxide colloids.

The results show that the concentrations of iron in the supernatant are substantially higher when the procedure is carried out using iron sludge than when it is done using iron sewage, and that the concentrations of iron in the supernatant initially increase with an increasing HumVi dose. A maximum concentration is reached at HumVi doses ranging from 10% to 25%.

Dosing HumVi to iron sludge results in substantially higher concentrations of iron in the supernatant than when HumVi is dosed to iron sewage (Figure 1). The higher concentrations of iron in the supernatant of iron sludge are probably attributable to the higher dry matter content (and total Fe content) of the sludge. This could mean that further concentration of the iron sludge will lead to a further increase in the iron concentration in the supernatant.

The present inventors assume that iron can be brought into solution in two ways after the mixing, viz. by complexing Fe3+ to fulvic acid or by bringing tiny iron oxide colloids into solution, viz. through dispersion of Fe oxide nanoparticles/colloids (nanoparticles are defined as particles ranging between 1 and a few hundred nanometres, while colloids are defined as particles larger than 100 nm). The present inventors assume that the iron is brought into solution mainly by dispersing Fe-oxide nanoparticles and colloids.

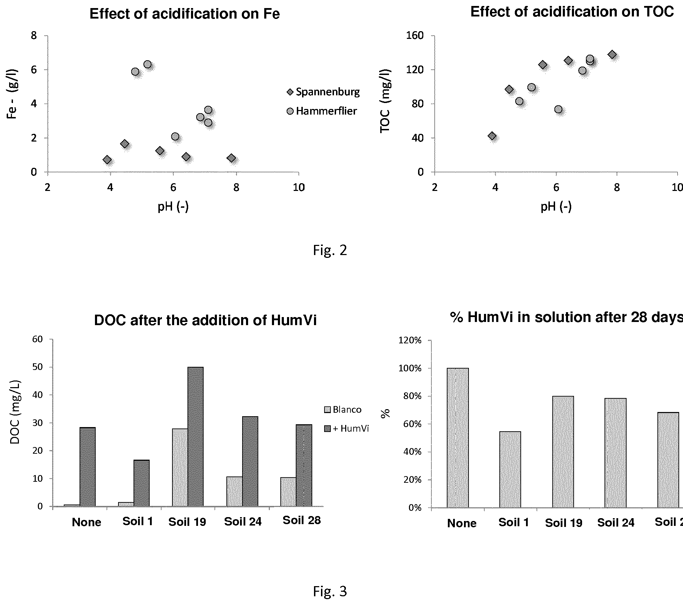

Figure 2 shows the effects of pH (after acidification with sulphuric acid) on the concentrations of Fe and TOC in the supernatant. Acidification does not have an unambiguous effect on the concentration of iron in the supernatant (Figure 2, left). The variation in Fe concentration is probably the result of differences in dry matter content between the different samples (the fast precipitation makes it difficult to take homogeneous subsamples). The results show that the TOC concentration decreases after acidification, which could imply precipitation of fulvic acids.

The Fe/TOC ratios in the present Fe-HumVi products are 100 to 1000 times higher than the Fe/TOC ratios quoted in the European application EP 1 216 976. The present inventors assume that these high Fe/TOC ratios are probably not attributable to Fe3+ complexing with fulvic acid. The present Fe-HumVi consists largely of Fe in a colloidal form, making it essentially different from the WEHS-Fe product known from Pinton's European application EP 1 216 976.

Fulvic acids play an important part in keeping iron particles in solution. Fulvic acids may adsorb onto iron oxides in the soil and consequently lose their function as suppliers of micronutrients. The present results show that the addition of HumVi and Fe-HumVi results in a substantial increase in the DOC concentration in the soil solution (Figure 3, left). The dosed fulvic acids remain stable for a long time: after 28 days 55 to 85% of the dosed HumVi was still in solution (Figure 3, right).

Dosing HumVi to iron sludge or iron sewage results in dispersion of iron particles. The iron-rich supernatant can be poured off after the iron+HumVi suspensions have been centrifuged. In this case the supernatant is the actual Fe-HumVi product. The highest Fe-total concentrations were obtained after HumVi had been added to iron sludge from Hammerflier (11 g/l), followed by St Jansklooster (4.5 g/l) and Spannenburg (1.7 g/l). However, not all the iron will be effective as an Fe nutrient. Roughly half of the total iron in Fe-HumVi is present in the form of large colloids (> 0.45 µm). The present inventors assume that the potentially effective Fe concentration ranges from 500 to 1300 mg/l.

**Table 5 Total and potentially effective iron concentrations in Fe-HumVi products**

| | **Iron sludge** | **Fe-HumVi** | | | |
|---|---|---|---|---|---|
| | **Fe-total** | **Fe-total** | **Fe<0.45 um** | **% stabile in soil¹** | **Potentially effective Fe concentration²** |
| | (g/l) | (g/l) | (g/l) | | (g/l) |
| Spannenburg | 14.2 | 1.7 | 0.9 | 54% | 0.5 |
| St. Jansklooster | 14.5 | 5.3 | 2.4 | 40% | 1.0 |
| Hammerflier | 35.8 | 13.1 | 6.3 | 20% | 1.3 |

| | | | | | |
|---|---|---|---|---|---|
| 1 in soil 24 after 28 days, % of Fe <0.45 um. 2 effectiveness must be tested in a potting test. | | | | | |

## Claims

1. A method for efficiently recycling a stream containing iron sludge, **characterised in that** the method comprises the following steps:
a) providing a stream containing iron sludge, which iron sludge is obtained from a sand filter that forms part of a process for the preparation of drinking water;
b) obtaining an aqueous product stream from a regeneration step at a drinking water production facility;
c) subjecting the aqueous product stream of step b) to a treatment for the recovery of salt, thereby producing a residual stream, wherein said treatment for the recovery of salt comprises at least one filtration step;
d) mixing the stream containing iron sludge of step a) with the residual stream of step c), thereby producing a mixed stream, wherein the residual stream of step c) is mixed with the aforementioned stream containing iron sludge of step a) in an amount ranging from 1 to 20 vol.%, based on the mixed stream thus obtained;
e) applying the mixed stream of step d) as an Fe nutrient in an agricultural context,
wherein humic and fulvic acids are present in the residual stream in a concentration ranging from 10 to 30 wt.%, based on the weight of the residual stream.

2. A method according to claim 1, **characterised in, that** said filtration step is diafiltration.

3. A method according to claim 1, **characterised in that** the amount of iron in the stream containing iron sludge ranges from 0.1 to 10 vol.%, based on the total volume of the aqueous stream.

4. A method according to one or more of claims 1-3 wherein the agricultural context is selected from the group comprising substrate cultivation, hydroponics and outdoor cultivation.

5. A method according to one or more of claims 1-3 wherein in step e) the mixed stream is used in animal feedstock.

## Patentansprüche

1. Verfahren zur effizienten Wiederaufbereitung eines eisenschlammhaltigen Stroms, **dadurch gekennzeichnet, dass** man bei dem Verfahren:
a) einen eisenschlammhaltigen Strom bereitstellt, dessen Eisenschlamm von einem Sandfilter, der Teil eines Prozesses zur Herstellung von Trinkwasser ist, erhalten wird;
b) einen wässrigen Produktstrom aus einem Regenerierungsschritt bei einer Trinkwasseraufbereitungsanlage erhält;
c)den wässrigen Produktstrom aus Schritt b) einer Behandlung zur Rückgewinnung von Salz unterwirft, wodurch ein Reststrom erzeugt wird, wobei die Behandlung zur Rückgewinnung von Salz mindestens einen Filtrationsschritt umfasst;
d) den eisenschlammhaltigen Strom aus Schritt a) mit dem Reststrom aus Schritt c) mischt, wodurch ein Mischstrom erzeugt wird, wobei der Reststrom aus Schritt c) mit dem oben erwähnten eisenschlammhaltigen Strom aus Schritt a) in einer Menge von 1 bis 20 Vol.-%, bezogen auf den so erhaltenen Mischstrom, gemischt wird;
e) den Mischstrom aus Schritt d) in einem landwirtschaftlichen Zusammenhang als Fe-Nährstoff einsetzt,
wobei Humin- und Fulvinsäuren in dem Reststrom in einer Konzentration von 10 bis 30 Gew.□%, bezogen auf das Gewicht des Reststroms, vorliegen.

2. Verfahren nach Anspruch 1, **dadurch gekennzeichnet, dass** es sich bei dem Filtrationsschritt um Diafiltration handelt.

3. Verfahren nach Anspruch 1, **dadurch gekennzeichnet, dass** die Eisenmenge in dem eisenschlammhaltigen Strom 0,1 bis 10 Vol.-%, bezogen auf das Gesamtvolumen des wässrigen Stroms, beträgt.

4. Verfahren nach einem der Ansprüche 1-3, wobei der landwirtschaftliche Zusammenhang aus der Substratanbau, Hydroponik und Freilandanbau umfassenden Gruppe ausgewählt ist.

5. Verfahren nach einem der Ansprüche 1-3, wobei der Mischstrom in Schritt e) beim Füttern von Tieren verwendet wird.

## Revendications

1. Procédé de recyclage efficace d'un flux contenant de la boue de fer, **caractérisé en ce que** le procédé comprend les étapes suivantes consistant :
a) à fournir un flux contenant de la boue de fer, laquelle boue de fer est obtenue à partir d'un filtre à sable qui fait partie d'un processus de préparation d'eau potable ;
b) à obtenir un flux de produit aqueux à partir d'une étape de régénération au niveau d'une installation de production d'eau potable ;
c) à soumettre le flux de produit aqueux de l'étape b) à un traitement pour la récupération du sel, produisant ainsi un flux résiduel, où ledit traitement pour la récupération du sel comprend au moins une étape de filtration ;
d) à mélanger le flux contenant de la boue de fer de l'étape a) avec le flux résiduel de l'étape c), produisant ainsi un flux mélangé, où le flux résiduel de l'étape c) est mélangé avec le flux susmentionné contenant de la boue de fer de l'étape a) en une quantité se situant dans la plage allant de 1 à 20% en volume, par rapport au flux mélangé ainsi obtenu ;
e) à appliquer le flux mélangé de l'étape d) en tant que nutriment Fe dans un contexte agricole,
dans lequel les acides humiques et fulviques sont présents dans le flux résiduel en une concentration se situant dans la plage allant de 10 à 30% en poids, par rapport au poids du flux résiduel.

2. Procédé selon la revendication 1, **caractérisé en ce que** ladite étape de filtration est une diafiltration.

3. Procédé selon la revendication 1, **caractérisé en ce que** la quantité de fer dans le flux contenant de la boue de fer se situe dans la plage allant de 0,1 à 10% en volume, par rapport au volume total du flux aqueux.

4. Procédé selon une ou plusieurs des revendications 1 à 3, dans lequel le contexte agricole est choisi dans le groupe comprenant la culture sur substrat, la culture hydroponique et la culture à l'extérieur.

5. Procédé selon une ou plusieurs des revendications 1 à 3, dans lequel, dans l'étape e), le flux mélangé est utilisé dans la nourriture pour animaux.
